# EUROPEAN PATENT APPLICATION

(11) **EP 1 826 857 A1**
(43) Date of publication of application: **29.08.2007**
(21) Application number: 05816749.5
(22) Date of filing: 07.12.2005
(51) Int. Cl.: H01M 8/24, H01M 8/02, H01M 8/10

(54) **IMPROVEMENT OF FLOW DISTRIBUTION CHARACTERISTICS OF FUEL CELL**

(30) Priority: 08.12.2004 JP 2004354856
(71) Applicant: TOYOTA JIDOSHA KABUSHIKI KAISHA, Toyota-shi, Aichi-ken, 471-8571 (JP)
(72) Inventor: YAGAMI, Yuichi c/o TOYOTA JIDOSHA KABUSHIKI, 4718571 (JP); NAKAMURA, Norihiko c/o TOYOTA JIDOSHA, Aichi; 4718571 (JP); UENO, Makoto c/o TOYOTA JIDOSHA KABUSHIKI, 4718571 (JP); SANO, Seiji c/o TOYOTA JIDOSHA KABUSHIKI, 4718571 (JP); KAJIWARA, Takashi c/o TOYOTA JIDOSHA KABUSHIKI, 4718571 (JP); SATO, Hiromichi c/o TOYOTA JIDOSHA KABUSHIKI, 4718571 (JP); INUI, Fumihiko c/o TOYOTA JIDOSHA KABUSHIKI, 4718571 (JP); OTA, Yoshifumi c/o TOYOTA JIDOSHA KABUSHIKI, 4718571 (JP); USAMI, Sho c/o TOYOTA JIDOSHA KABUSHIKI, 4718571 (JP)
(74) Representative: TBK-Patent
(86) International application number: PCT/JP2005/022910
(87) International publication number: WO 2006/062242

(57) **Abstract**

A fuel cell has a plurality of unit fuel cells and a gas manifold configured to path through the plurality of the unit fuel cells. Each of the plurality of unit fuel cells has an electrode and a separator. The separator includes in its interior a plurality of gas channels configured to communicate the gas manifold and a gas passage existing on a surface of the electrode. These gas channels include at least one gas through hole configured to open on a surface of the separator facing the electrode. The gas through holes provided on the plurality of gas channels include a first through hole group provided at a short distance from the gas manifold, and a second through hole group provided at a large distance from the gas manifold.

## Description

### TECHNICAL FIELD

The present invention relates to a technique for improving gas flow distribution characteristics of a fuel cell.

### BACKGROUND ART

In general, a fuel cell has a stack of a plurality of unit fuel cells. Fuel cells with a reaction gas channels formed inside the separators have been proposed to facilitate alignment of each member constituting the unit fuel cell while stacking these unit fuel cells, and to facilitate assemble of the fuel cell. For example, JP2002-15110A discloses a fuel cell having gas through holes provided on the electrode side of the reaction gas channel, for supplying reaction gas to the electrodes and for exhausting the reaction gas from the electrodes.

However, when reaction gas is supplied to the electrode via such a gas through hole, the flow rate of the reaction gas may be different at the downstream side of an electrode part that is close to the gas through hole and at the downstream side of another electrode part that is not close to the gas through hole, resulting in uneven reaction gas flow rate within the electrode.

The present invention is created considering the prior art problem described above, and its object is to uniformize the reaction gas flow rate in the electrode.

### DISCLOSURE OF THE INVENTION

To achieve at least part of the above mentioned object, a fuel cell of the present invention is provided. The fuel cell has a plurality of unit fuel cells each having an electrode and a separator ; and a gas manifold configured to pass through the plurality of the unit fuel cells, wherein the separator includes a plurality of gas channels configured to communicate the gas manifold and a gas passage existing on a surface of the electrode, the plurality of gas channels being located internally in the separator, each of the plurality of gas channels includes at least one gas through hole configured to open on a surface of the separator facing the electrode, and the gas through holes of the plurality of gas channels include a first through hole group provided at a first distance from the gas manifold, and a second through hole group provided at a second distance greater than the first distance from the gas manifold.

With this arrangement, since the flow of the reaction gas is disturbed by the collision of the reaction gas at the surface of the electrode, it is possible to increase the uniformity of the reaction gas flow rate in the electrode.

Note that the present invention can be realized with various aspects, for example, it is possible to realize it with an aspect of a fuel cell and a fuel cell system using that fuel cell, or a power generating device using that fuel cell system and an electric powered car incorporating that fuel cell system.

### BRIEF DESCRIPTION OF THE DRAWINGS

FIGs. 1(a) and 1(b) are explanatory drawings showing the configuration of a fuel cell stack 100 constituting a fuel cell.
FIGs. 2(a) to 2(c) are schematic drawings that show the shape of three plates 300, 400 and 500 constituting a unit fuel cell 200.
FIGs. 3(a) and 3(b) are explanatory drawings showing the fuel gas flow in the first embodiment.
FIGs. 4(a) and 4(b) are explanatory drawings showing the oxidant gas flow in the first embodiment.
FIGs. 5(a) and 5(b) are explanatory drawings showing the oxidant gas flow in the second embodiment.
FIGs. 6(a) and 6(b) are explanatory drawings showing the oxidant gas flow in the third embodiment.
FIGs. 7(a) to 7(c) are explanatory drawings showing the oxidant gas flow in the fourth embodiment.

### BEST MODE FOR CARRYING OUT THE INVENTION

The best mode for carrying out the invention is described in the following order based on embodiments.
A. First Embodiment:
B. Second Embodiment:
C. Third Embodiment:
D. Fourth Embodiment:
E. Variation:

### A. First Embodiment:

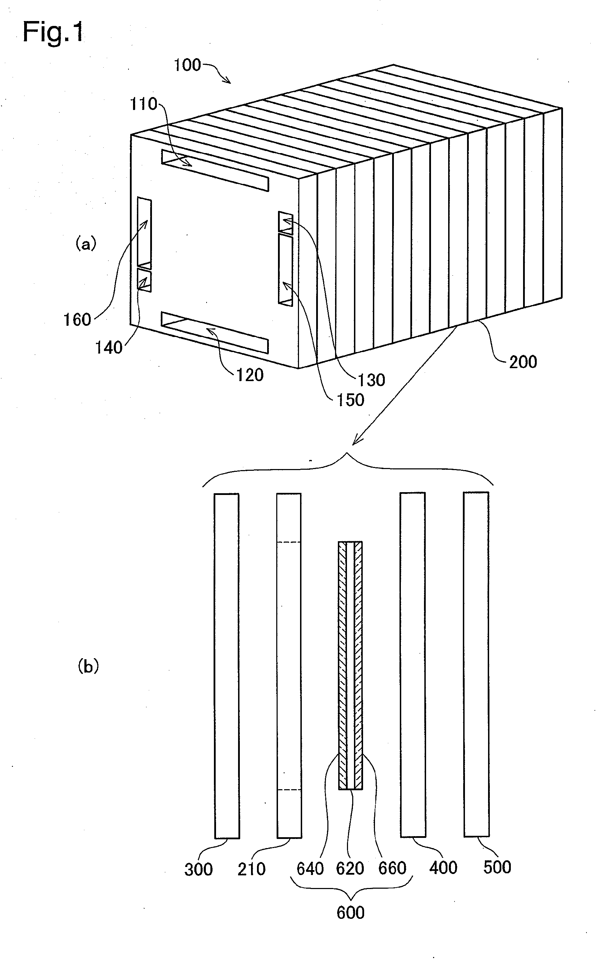

FIG. 1(a) is an explanatory drawing showing the configuration of a fuel cell stack 100 constituting a fuel cell as an embodiment of the present invention. The fuel cell stack 100 is configured by stacking a plurality of unit fuel cells 200. The fuel cell stack 100 includes an oxidant gas supply manifold 110, an oxidant gas exhaust manifold 120, a fuel gas supply manifold 130, a fuel gas exhaust manifold 140, a cooling water supply manifold 150, and a cooling water exhaust manifold 160.

FIG. 1(b) is an explanatory drawing showing the configuration of the unit fuel cell 200. The unit fuel cell 200 includes an anode side plate 300, a cathode side plate 400, an intermediate plate 500, a membrane electrode assembly 600, and a seal member 210.

Each of the three plates 300, 400 and 500 are flat plates with various shaped holes formed by press forming. These plates 300, 400 and 500 are formed from a material having gas impermeability and electrical conductivity such as stainless steel. These three plates 300, 400 and 500 are stacked to from a separator which has separated channels for the fuel gas, the oxidant gas, and the cooling water.

The membrane electrode assembly 600 has an electrolytic membrane 620, an anode 640, and a cathode 660. The electrolytic membrane 620 is an ion exchange membrane, which has high conductivity in the wet state, formed by a fluorine type resin such as Nafion (trademark of Dupont). The anode 640 and the cathode 660 are formed by a porous material having gas diffusion properties and conductivity such as a carbon cloth. On this anode 640 and cathode 660, fuel cell reaction catalyst such as platinum or platinum alloy is supported. Note that hereinafter, the anode 640 and the cathode 660 are collectively referred as an "electrode."

The seal member 210 is formed from a material having gas impermeability, elasticity, and heat resistance such as silicon rubber. The seal member includes a hole for placing the membrane electrode assembly 600 at the center part of the seal member 210, as shown by the dashed lines.

Each of the three plates 300, 400, and 500 and the seal member 210 include a plurality of through holes (not illustrated). These through holes form the manifolds 110 to 160 when the unit fuel cells 200 are stacked to assemble the fuel cell stack 100. Note that hereafter, these through holes are also called "manifold holes."

The unspent oxidant gas is supplied to the unit fuel cells 200 via the oxidant gas supply manifold 110, and the spent oxidant gas exhausted from the unit fuel cells 200 (cathode off gas) is exhausted via the oxidant gas exhaust manifold 120. The unspent fuel gas is supplied to the unit fuel cells 200 via the fuel gas supply manifold 130, and the spent fuel gas exhausted from the unit fuel cells 200 (anode off gas) is exhausted via the fuel gas exhaust manifold 140. Note that, since the oxidant gas and fuel gas are gases used for the fuel cell reaction, these gases are collectively called as a "reaction gas" in general.

The cooling water of the fuel cell stack 100 is supplied to the unit fuel cells 200 via the cooling water supply manifold 150. Then, the cooling water that flows in the cooling water channels (not illustrated) in the separator are exhausted from the fuel cell stack 100 via the cooling water exhaust manifold 160.

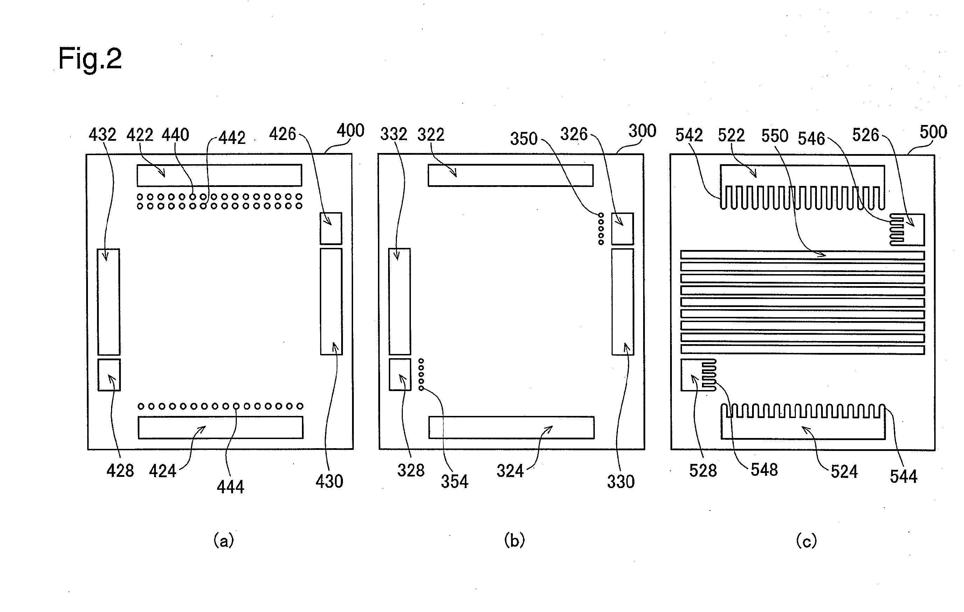

FIG. 2(a) shows view of the cathode side plate 400 from the membrane electrode assembly 600 side (left side of FIG. 1(b)). Six manifold holes 422 to 432 are formed at the periphery of the cathode side plate 400. In addition to these manifold holes 422 to 432, a first oxidant gas supply hole group including a plurality of oxidant gas supply holes 440, a second oxidant gas supply hole group including a plurality of oxidant gas supply holes 442, and an oxidant gas exhaust hole group including a plurality of oxidant gas exhaust holes 444 are formed on the cathode side plate 400. As shown in FIG. 2(a), the distance of the first oxidant gas supply hole group from the manifold hole 422 is smaller than that of the second oxidant gas supply hole group.

FIG. 2(b) shows the view of the anode side plate 300 from the intermediate plate 500 side (left side of FIG. 1(b)). Six manifold holes 322 to 332 are formed at the periphery of the anode side plate 300, similar to the cathode side plate 400 shown in FIG. 2(a). In addition to these manifold holes 322~332, a plurality of fuel gas supply holes 350 and a plurality of fuel gas exhaust holes 354 are formed on the anode side plate 300.

FIG. 2(c) shows the view of the intermediate plate 500 from the cathode side plate 400 side (left side of FIG. 1(b)). Four manifold holes 522 to 528 are formed on the intermediate plate 500, similar to the cathode side plate 400 and the anode side plate 300 shown in FIG. 2(a) and FIG. 2(b).

Comb-tooth shaped oxidant gas supply channel holes 542 for communicating the oxidant gas supply holes 440 and 442 and the oxidant gas supply manifold 110 are formed on the manifold hole 522 corresponding to the oxidant gas supply manifold 110. As a result, in the stack of these three plates 300, 400 and 500, a plurality of oxidant gas supply channels are formed, and the oxidant gas supply manifold 110 and the oxidant gas supply holes 440 and 442 are communicated.

Comb-tooth shaped oxidant gas exhaust channel holes 544 for communicating the oxidant gas exhaust holes 444 and the oxidant gas exhaust manifold 120 are formed on the manifold hole 524 corresponding to the oxidant gas exhaust manifold 120. Similarly, comb-tooth shaped fuel gas supply channel holes 546 for communicating the fuel gas supply manifold 130 and the fuel gas supply holes 350 are formed on the manifold hole 526 corresponding to the fuel gas supply manifold 130. Also, comb tooth shaped fuel gas exhaust channel holes 548 for communicating the fuel gas exhaust holes 354 and the fuel gas exhaust manifold 140 are formed on the manifold hole 528 corresponding to the fuel gas exhaust manifold 140.

In addition to these manifold holes 522 to 528 and the gas channel holes 542, 544, 546 and 548, the intermediate plate 500 includes a plurality of cooling water channel holes 550 that extend from the position of the cooling water supply manifolds 150 (manifold holes 330 and 430) to the position of the cooling water exhaust manifolds 160 (manifold holes 332 and 432). In the stack of the three plates 300, 400 and 500, these cooling water channel holes 550 form the cooling water channels that communicate the cooling water supply manifold 150 and the cooling water exhaust manifold 160.

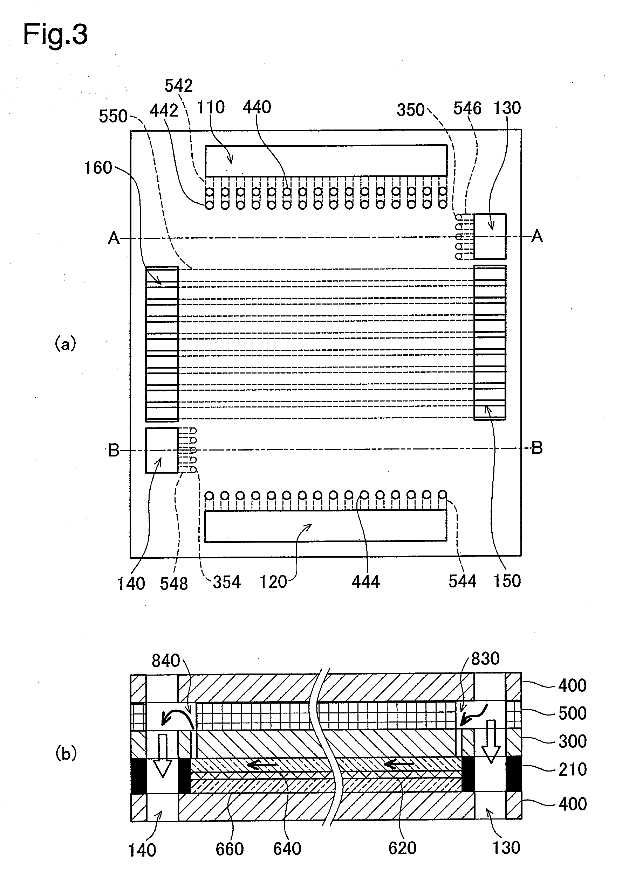

FIGs. 3(a) and 3(b) are explanatory drawings showing the fuel gas flow in the first embodiment. FIG. 3(a) shows the view of the separator for which the three plates 400, 500 and 300 are stacked in that order from the left side of FIG. 1(b). The right half of FIG. 3(b) shows the cross section along the line A-A (dot-dash line in FIG. 3(a)) in a state that the membrane electrode assembly 600 (FIG. 1(b)) and the cathode side plate 400 are stacked on the separator. The left half of FIG. 3(b) shows the cross section along line B-B (two-dot dash line in FIG. 3(a)).

As shown in FIG. 3(b), by stacking the three plates 400, 500 and 300, the fuel gas supply channel hole 546 and the fuel gas supply hole 350 form a fuel gas supply channel 830 that supplies fuel gas from the fuel gas supply manifold 130 to the anode 640. Similarly, the fuel gas exhaust hole 354 and the fuel gas exhaust channel hole 548 form a fuel gas exhaust channel 840 that exhausts fuel gas from the anode 640 to the fuel gas exhaust manifold 140. Note that as shown in FIG. 3(b), each of the fuel gas supply hole 350 and the fuel gas exhaust hole 354 are fuel gas through holes that open on the electrode side surface of the separator.

As shown by the arrow in FIG. 3(b), fuel gas is supplied from the fuel gas supply manifold 130 via the fuel gas supply channel 830 to the anode 640. The fuel gas supplied to the anode 640 is used with the fuel cell reaction while flowing in the porous anode 640. Then, the spent fuel gas is exhausted from the anode 640 via the fuel gas exhaust channel 840 to the fuel gas exhaust manifold 140. Note that in this case, the anode 640 is a fuel gas passage that passes the fuel gas from the upstream side anode 640 surface to the downstream side anode 640 surface.

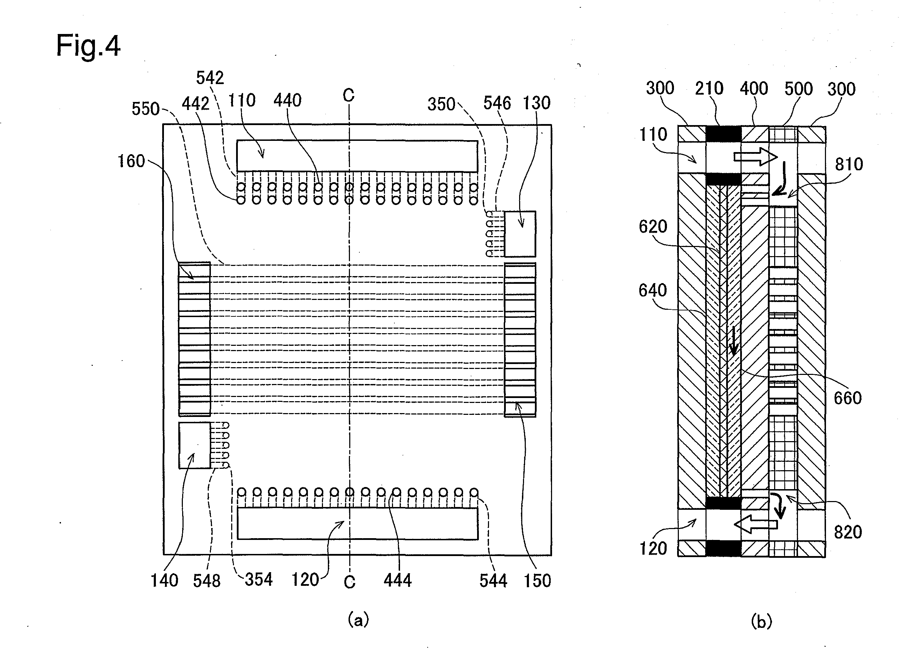

FIGs. 4(a) and 4(b) are explanatory drawings showing the flow of oxidant gas in the first embodiment. FIG. 4(a) shows the view of the separator with the three plates 400, 500 and 300 stacked in this order from the left side of FIG. 1(b). FIG. 4(b) shows the cross section along line C-C (dot-dash line of FIG. 4(a)) in a state that the membrane electrode assembly 600 (FIGs. 1) and the anode side plate 300 are stacked on the separator.

As shown in FIG. 4(b), by stacking the three plates 400, 500 and 300, the oxidant gas supply channel hole 542 and the oxidant gas supply hole 440 and 442 form a oxidant gas supply channel 810 that supplies oxidant gas from the oxidant gas supply manifold 110 to the cathode 660. Similarly, the oxidant gas exhaust hole 444 and the oxidant gas exhaust channel hole 544 form a oxidant gas exhaust channel 820 that exhausts oxidant gas from the cathode 660 to the oxidant gas exhaust manifold 120. Note that as shown in FIG. 4(b), each of the oxidant gas supply holes 440 and 442 and the oxidant gas exhaust hole 444 are oxidant gas through holes opened on the separator electrode side surface.

In the unit fuel cells 200 configured in this way, the oxidant gas is supplied from the oxidant gas supply manifold 110 via the oxidant gas supply channel 810 to the cathode 660 as shown by the arrow in FIG. 4(b). The oxidant gas supplied to the cathode 660 is used with the fuel cell reaction while flowing in the porous cathode 660. Then, the spent oxidant gas is exhausted from the cathode 660 via the oxidant gas exhaust channel 820 to the oxidant gas exhaust manifold 120. Note that in this case, the cathode 660 is the oxidant gas passage that passes the oxidant gas from the upstream side cathode 660 surface to the downstream side cathode 660 surface.

In this case, the oxidant gas supplied from the upstream side oxidant gas supply hole 440 near the oxidant gas supply manifold 110 to the cathode 660 has its main flow direction in a parallel direction to the line C-C of FIG. 4(a). At the downstream position of the oxidant gas supply hole 442 far from the oxidant gas supply manifold 110, the oxidant gas is supplied in a direction orthogonal to the main flow direction. In this way, the flow of the oxidant gas is disturbed by the collision of oxidant gas flow of different directions, so the flow rate of oxidant gas is averaged, and the uniformity of the oxidant gas flow rate in the cathode 660 increases.

As shown in FIG. 4(b), the oxidant gas supply channel 810 is formed by the oxidant gas supply channel hole 542 and the oxidant gas supply holes 440 and 442, so the channel branches at the intermediate plate 500 side end of the oxidant gas supply hole 440. The oxidant gas supply channel 810 branches, so even if a hole among the oxidant gas supply hole 440 and 442 is blocked by a foreign substance incorporated in the oxidant gas, the oxidant gas is supplied to the cathode 660 through the oxidant gas supply hole that is not blocked. Because of this, with the first embodiment, it is possible to suppress decrease in uniformity of the oxidant gas flow rate in the cathode 660 due to blocking of the oxidant gas supply hole.

In this way, with the first embodiment, by providing two oxidant gas supply holes 440 and 442 on one oxidant gas supply channel 810, it is possible to collide different direction oxidant gas flows. Because of this, the flow of the oxidant gas is disturbed by the collision of the oxidant gas flow in the cathode 660, so the uniformity of the oxidant gas flow rate in the cathode 660 increases.

Note that with the first embodiment, a plurality of oxidant gas supply holes constitute the first and second two oxidant gas supply hole groups, but the number of oxidant gas supply hole groups may be any number of 2 or greater. Even in this case, the distances from the oxidant gas supply manifold 110 (manifold hole 422) of each oxidant gas supply hole group are set to be mutually different.

### B. Second Embodiment:

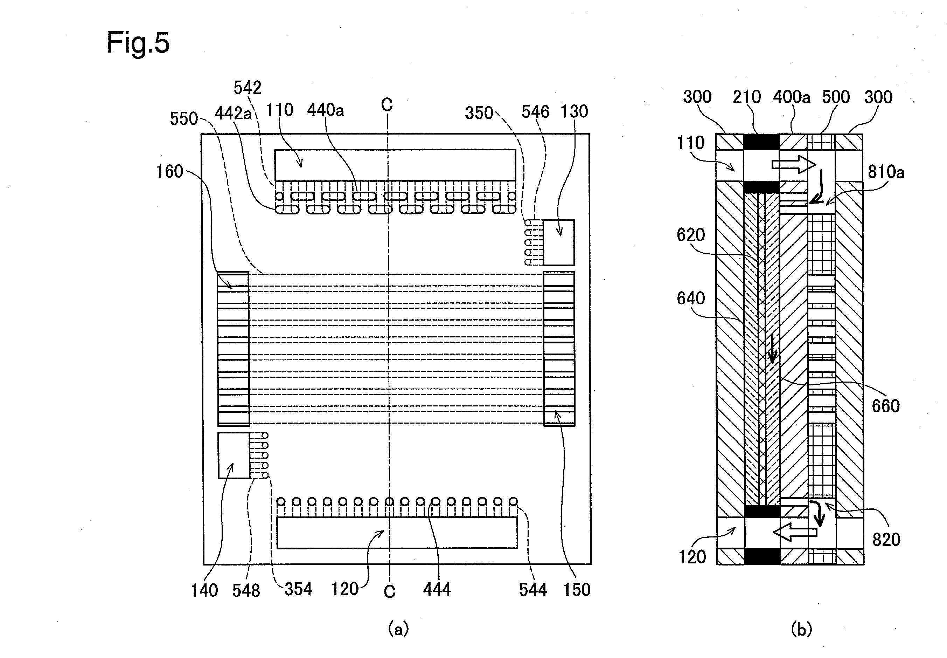

FIGs. 5(a) and 5(b) are explanatory drawings showing the flow of oxidant gas in the second embodiment. With the second embodiment, the point that differs from the first embodiment is that the cathode side plate 400a includes oblong oxidant gas supply holes 440a and 442a instead of the circular oxidant gas supply holes 440 and 442. The other points are the same as the first embodiment.

FIG. 5(a) shows the view of the separator for which the three plates 400a, 500 and 300 are stacked in that order from the left side of FIG. 1(b). FIG. 5(b) shows the cross section along line C-C (dot-dash line in FIG. 5(a)) with the membrane electrode assembly 600 (FIGs. 1(b)) and the anode side plate 300 stacked on the separator.

As shown in FIG. 5(a), a plurality of oxidant gas supply holes 440a and 442a are arranged in zigzag form on the cathode side plate 400a. These oxidant gas supply holes 440a and 442a are holes that link the two adjacent oxidant gas supply holes 440 and 442 (FIG. 4 (a)) in the first embodiment. Specifically, the oxidant gas supply holes 440a and 442a are expanded through holes formed by linking channels that communicate the adjacent oxidant gas supply holes 440 and 442 and the oxidant gas supply holes 440 and 442.

Note that with the second embodiment, the plurality of oxidant gas supply holes 440a are formed by communicating two oxidant gas supply holes 440 belonging to the first oxidant gas supply hole group, and the plurality of oxidant gas supply holes 442a are formed by communicating two oxidant gas supply holes 442 belonging to the second oxidant gas supply hole group. Because of this, we may say that the two oxidant gas supply hole groups have expanded through holes 440a and 442a respectively.

With the second embodiment as well, as shown in FIG. 5(b), the oxidant gas supply channel hole 542 and the oxidant gas supply holes 440a and 442a form an oxidant gas supply channel 810a that supply oxidant gas from the oxidant gas supply manifold 110 to the cathode 660. As shown by the arrow in FIG. 5(b), the oxidant gas is supplied from the oxidant gas supply manifold 110 via the oxidant gas supply channel 810a to the cathode 660.

With the second embodiment as well, the oxidant gas flow from the upstream side oxidant gas supply hole 440a and the oxidant gas flow from the downstream side oxidant gas supply hole 442a collide at the position of the oxidant gas supply channel hole 542. Because of this, the flow of the oxidant gas is disturbed by the collision of the oxidant gas flows in the cathode 660, so it is possible to increase the uniformity of the oxidant gas flow rate in the cathode 660.

Also, the oxidant gas supplied to the cathode 660 flows toward downstream from the overall oblong oxidant gas supply holes 440a and 442a. The oxidant gas supply holes 440a and 442a are formed across the entire width of the cathode 660, so it is possible to further increase the uniformity of the oxidant gas flow rate within the cathode 660.

The adjacent oxidant gas supply channel holes 542 are communicated by the oblong oxidant gas supply holes 440a and 442a. The adjacent oxidant gas supply channel holes 542 are communicated, so even if either of the oxidant gas supply channel holes 542 is blocked by a foreign substance incorporated in the oxidant gas, the oxidant gas is supplied to the cathode 660 through the oxidant gas supply channel holes 542 that is not blocked. Because of this, with the second embodiment, it is possible to suppress decrease in uniformity of the oxidant gas flow rate in cathode 660 due to blockage of the oxidant gas supply channel hole 542.

In this way, with the second embodiment as well, the same as with the first embodiment, the oxidant gas flow is disturbed by the collision of the oxidant gas flows in the cathode 660, so it is possible to increase the uniformity of the oxidant gas flow rate in the cathode 660.

The second embodiment is preferable to the first embodiment in that it is possible to suppress decrease in uniformity of the oxidant gas flow rate in the cathode 660 due to blocking of the oxidant gas supply channel hole 542. On the other hand, the first embodiment is preferable to the second embodiment in that the opening area of the oxidant gas supply holes provided on the cathode side plate is small, and it is possible to suppress a decrease in rigidity of the cathode side plate.

Note that with the second embodiment, the expanded through holes are formed by communicating two oxidant gas supply holes that belong to the same oxidant gas supply hole group, but generally, it is acceptable as long as the expanded through hole communicates L (L is any integer of 2 or more) oxidant gas supply holes provided on adjacent oxidant gas supply channels. For example, it is also possible to communicate the oxidant gas supply hole 440 provided on a certain oxidant gas supply channel and the oxidant gas supply hole 442 provided on the oxidant gas supply channel adjacent to that channel. In this case, the arrangement of the expanded through holes is in straight line form rather than in zigzag form.

### C. Third Embodiment :

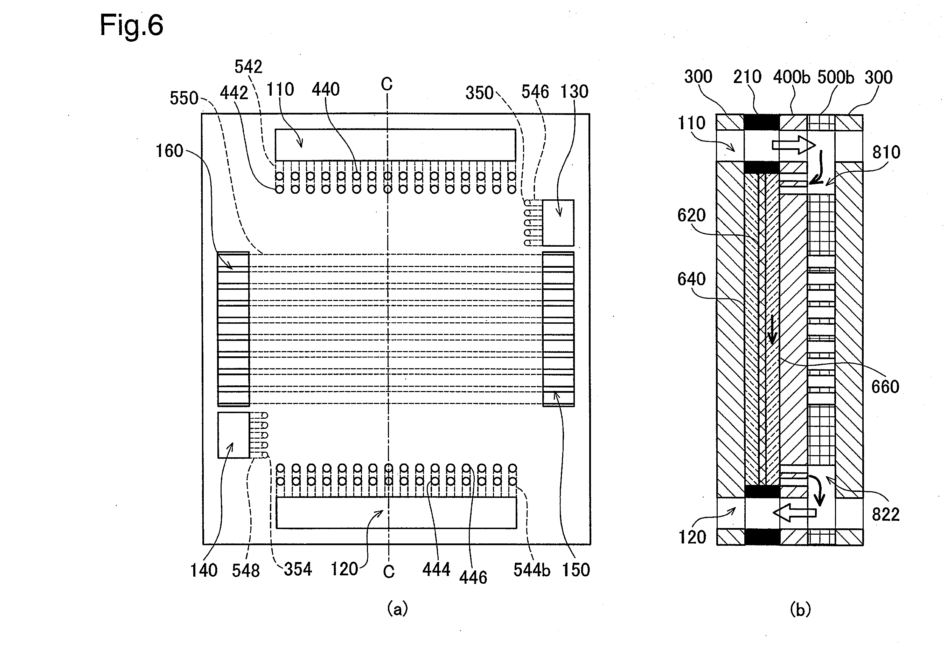

FIGs. 6(a) and 6(b) are explanatory drawings showing the oxidant gas flow in the third embodiment. The third embodiment differs from the first embodiment in that the cathode side plate 400b further includes the oxide gas exhaust hole 446, and in that the oxidant gas exhaust channel holes 544b is formed so as to communicate the oxidant gas exhaust manifold 120 and the oxidant gas exhaust holes 444 and 446. The other points are the same as the first embodiment.

FIG. 6(a) shows the view of the separator for which the three plates 400b, 500b and 300 are stacked in that order from the left side of FIG. 1(b). FIG. 6(b) shows a cross section along line C-C (dot-dash line in FIG. 6 (a)) in a state that the membrane electrode assembly 600 (FIG. 1(b)) and the anode side plate 300 are stacked on the separator.

As shown in FIG. 6(a), the cathode side plate 400b is formed with a plurality of oxidant gas exhaust holes 446 provided on the cathode side plate 400 of the first embodiment. The distance of the second oxidant gas exhaust hole group consisting of this plurality of oxidant gas exhaust holes 446 from the oxidant gas exhaust manifold 120 is greater than that of the first oxidant gas exhaust hole group having the plurality of oxidant gas exhaust holes 444.

As shown in FIG. 6(b), an oxidant gas exhaust channel 822 if formed by the oxidant gas exhaust channel hole 544b and the oxidant gas exhaust holes 444 and 446, so the channel branches at the intermediate plate 500 side end of the oxidant gas exhaust hole 446. Because the oxidant gas exhaust channel 822 is branched, even if one of the oxidant gas exhaust holes 444 and 446 is blocked by a substance generated in the cathode 660 such as water, the oxidant gas is exhausted from the cathode 660 through the oxidant gas exhaust hole that is not blocked. Because of this, with the third embodiment, it is possible to suppress decrease in uniformity of the oxidant gas flow rate at the downstream parts of the cathode 660 due to blocking of the oxidant gas exhaust hole.

Note that with the third embodiment as well, the same as with the first embodiment, two oxidant gas supply holes 440 and 442 are provided on one oxidant gas supply channel 810. Because of this, the oxidant gas flow collides in the cathode 660, and the uniformity of the oxidant gas flow rate in the cathode 660 increases. Also, because the oxidant gas supply channel 810 is branched, it is possible to suppress decrease in uniformity of the oxidant gas flow rate in the cathode 660 due to blocking of the oxidant gas supply hole.

The third embodiment is preferable to the first embodiment in terms of being able to suppress decrease in uniformity of the oxidant gas flow rate of the downstream part of the cathode 660 due to blocking of the oxidant gas exhaust hole. On the other hand, the first embodiment is preferable to the third embodiment in that it is able to suppress decrease in rigidity of the cathode side plate because the number of oxidant gas exhaust holes provided on the cathode side plate is small.

Note that with the third embodiment, the cathode side plate 400b has two oxidant gas supply hole groups and two oxidant gas exhaust hole groups, but it is also possible to have M (M is any integer of 1 or greater) oxidant gas supply hole groups and N (N is any integer of 2 or greater) oxidant gas exhaust hole groups. Even when number of the oxidant gas supply hole group is 1, it is possible to suppress decrease in uniformity of the oxidant gas flow rate of the downstream part of the cathode 660 due to blocking of the oxidant gas exhaust hole.

### D. Fourth Embodiment:

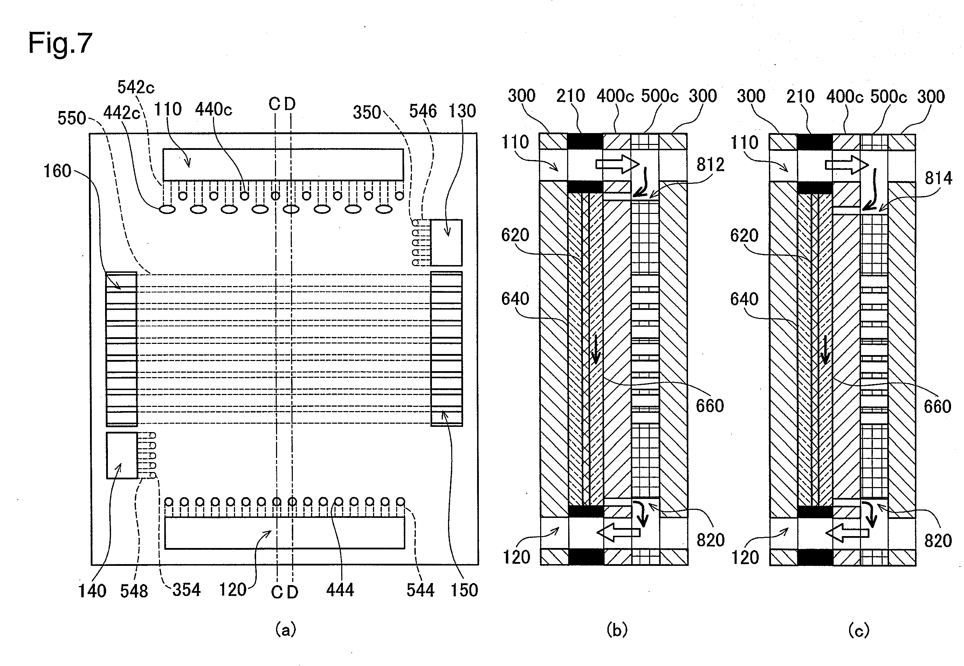

FIGs. 7(a) to 7(c) are explanatory drawings showing the oxidant gas flow in the fourth embodiment. The fourth embodiment differs from the first embodiment in that one oxidant gas supply channel hole 542c has one of oxidant gas supply holes 440c, 442c, and that the oxidant gas supply hole 442c is formed in a horizontally long ellipse shape. The other points are the same as with the first embodiment.

FIG. 7(a) shows the view of the separator for which the three plates 400c, 500c and 300 are stacked in that order from the left side of FIG. 1(b). FIG. 7(b) shows a cross section along line C-C (dot-dash line in FIG. 7(a)) in a state that the membrane electrode assembly 600 (FIG. 1(b)) and the anode side plate 300 are stacked on the separator. Also, FIG. 7(c) shows a cross section along line D-D (double dot-dash line in FIG. 7(a)).

As shown in FIG. 7 (a), with the fourth embodiment, the oxidant gas supply holes 440c and 442c corresponding to the adjacent oxidant gas supply channel holes 542c are arranged on two straight lines which have mutually different distances from the oxidant gas supply manifold 110. Since the oxidant gas supply holes 440c and 442c are arranged in this way, the oxidant gas supply holes 442c with the large opening area does not close each other, so it is possible to suppress decrease in the rigidity of the cathode side plate 400c.

With the fourth embodiment, as shown in FIG. 7(b), the oxidant gas supply channel hole 542c and the oxidant gas supply hole 440c form an oxidant gas supply channel 812. Also, as shown in FIG. 7(c), the oxidant gas supply channel hole 542c and the oxidant gas supply hole 442c form an oxidant gas supply channel 814. The oxidant gas is supplied to the cathode 660 from the oxidant gas supply manifold 110 via these oxidant gas supply channels 812 and 814.

With the fourth embodiment as well, the oxidant gas flow from the upstream side oxidant gas supply holes 440c and the oxidant gas flow from the downstream side oxidant gas supply holes 442c are collided at the position of the oxidant gas supply hole 442c. Because of this, the flow of the oxidant gas is disturbed by the collision of the oxidant gas flow in the cathode 660, so it is possible to increase the uniformity of the oxidant gas flow rate in the cathode 660.

Also, the oxidant gas supplied to the cathode 660 flows toward downstream from the overall circular oxidant gas supply holes 440c and the ellipse shaped oxidant gas supply holes 442c. These oxidant gas supply holes 440c and 442c are formed extending across the entire width of the cathode 660, so it is possible to increase the uniformity of the oxidant gas flow rate in the cathode 660.

In this way, with the fourth embodiment as well, the same as with the first embodiment, the flow of the oxidant gas is disturbed by the collision of the oxidant gas flow in the cathode 660, so it is possible to increase the uniformity of the oxidant gas flow rate within the cathode 660.

Note that with the fourth embodiment, the downstream side oxidant gas supply holes 442c have a horizontally long elliptical shape, and the upstream side oxidant gas supply hole 440c is circular, but as long as the total opening area of the downstream side oxidant gas supply holes are the same or greater than the total opening area of the upstream side oxidant gas supply holes, it is also possible to form the upstream side oxidant gas supply holes and the downstream side oxidant gas supply holes in different shapes. By forming the upstream side and downstream side oxidant gas supply holes in this way, by the collision of the oxidant gas flow from the upstream side oxidant gas supply holes and the oxidant gas from the downstream side oxidant gas supply holes, it is possible to disturb this flow.

Also, with the fourth embodiment, the oxidant gas supply holes corresponding to the adjacent oxidant gas exhaust channel holes are arranged on two straight lines of different mutual distances from the oxidant gas supply manifold, but it is also possible to arrange the oxidant gas exhaust holes corresponding to the adjacent oxidant gas exhaust channel holes on straight lines of mutually different distances from the oxidant gas exhaust manifold. In this case, the distance of the oxidant gas exhaust hole is greater than providing the oxidant gas exhaust hole on a single straight line, so the possibility of adjacent oxidant gas exhaust holes being blocked simultaneously by generated water is decreased. Because of this, it is possible to suppress decrease in uniformity of the gas at the downstream part of the cathode due to blocking of the oxidant gas exhaust holes.

In this case, for the oxidant gas exhaust holes, the oxidant gas exhaust holes are formed extending across the entire width of the cathode 660, further increasing the uniformity of the oxidant gas flow rate, so it is preferable to make the total opening area larger for one of the upstream side oxidant gas exhaust hole or the downstream side oxidant gas exhaust hole. In this case, it is possible to suppress decrease in the rigidity of the cathode side plate, so it is preferable to make the total opening area of the oxidant gas exhaust hole distance from the oxidant gas exhaust manifold larger than the total opening area of the oxidant gas exhaust hole nearer to the oxidant gas exhaust manifold.

### E. Variations:

Note that the present invention is not limited to the aforementioned embodiments and aspects, but can be implemented with various aspects in a scope that does not stray from the key points, and for example, the following kinds of variations are also possible.

### E1. Variation 1 :

With each of the aforementioned embodiments, as shown in FIGs. 2, the holes of the anode side plate 300 and the holes of the cathode side plate 400 arranged to different position. However, in general, it is acceptable as long as the channels of the oxidant gas, the fuel gas, and the cooling gas are not communicated. These reaction gas channels and the cooling water channel may be separated by providing a gas impermeable member on the anode side plate 300 at the position of the oxidant gas supply channel holes 542 and the oxidant gas exhaust channel holes 544, and by providing a gas impermeable member at the cathode side plate 400 at the position of the fuel gas supply channel holes 546 and the fuel gas exhaust channel holes 548.

### E2. Variation 2:

With each of the aforementioned embodiments, a separator having gas channels (oxidant gas supply channels, oxidant gas exhaust channels, fuel gas supply channels, fuel gas exhaust channels) that communicate the manifolds and the electrodes is formed by three plates, but it is also possible to form the separator using another configuration. For example, it is also possible to form a separator by stacking a member provided with a channel groove and a gas through hole for forming the gas channels, and a plurality of members containing members for separating the channels of the fuel gas, the oxidant gas, and the cooling water.

### E3. Variation 3:

With each of the aforementioned embodiments, by forming the electrode with a single porous material that is used as a gas passage for passing the reaction gas through the electrode, but it is also possible to form the gas passage using another method. For example, by providing a gas diffusion layer formed using a porous material with a higher porosity than the porosity of the porous material of the electrolytic side on the electrode, the high porosity gas diffusion layer becomes the gas passage that passes through reaction gas. It is also possible to form a channel groove on the surface in contact with the electrode of the separator, and to use the channel formed by that channel groove and the electrode as the gas passage.

### E4. Variation 4 :

With each of the aforementioned embodiments, improvement of the uniformity of oxide gas flow rate in the cathode by application of the present invention is described, but it is also possible to improve the uniformity of the fuel gas flow rate in the anode by applying the present invention to the fuel gas channel.

## Claims

1. A fuel cell, comprising:
a plurality of unit fuel cells each having an electrode and a separator; and
a gas manifold configured to pass through the plurality of the unit fuel cells, wherein
the separator includes a plurality of gas channels configured to communicate the gas manifold and a gas passage existing on a surface of the electrode, the plurality of gas channels being located internally in the separator,
each of the plurality of gas channels includes at least one gas through hole configured to open on a surface of the separator facing the electrode, and
the gas through holes of the plurality of gas channels include a first through hole group provided at a first distance from the gas manifold, and a second through hole group provided at a second distance greater than the first distance from the gas manifold.

2. The fuel cell in accordance with claim 1, wherein
each of the plurality of gas channels has gas a through hole belonging to the first through hole group and a gas through hole belonging to the second through hole group.

3. The fuel cell in accordance with claim 2, wherein
the separator has a linking channel connecting the gas through holes provided on adjacent gas channels such that the linking channel and the gas through holes form an expanded through hole.

4. The fuel cell in accordance with claim 3, wherein
the first through hole group and the second through hole group respectively include a plurality of expanded through holes, and
the plurality of expanded through holes of the first through hole group and the plurality of expanded through holes of the second through hole group are arranged in zigzag form.

5. The fuel cell in accordance with any of claims 1 through 4, wherein
the separator is formed by stacking a first plate, a second plate, and a third plate in that order,
each of the first plate, the second plate, and the third plate has a manifold hole forming the gas manifolds when the three plates are stacked,
the first plate has the gas through hole,
the second plate has a gas channel hole forming the plurality of gas channels by communicating the gas through holes and the manifold hole, and
the third plate has a gas impermeable member at a position in contact with the gas channel hole.

6. The fuel cell in accordance with claim 5, wherein
the electrode has a gas diffusion layer forming the gas passage.

7. The fuel cell in accordance with any of claims 1 through 6, wherein
the total opening area of the second through hole group is larger than the total opening area of the first through hole group.
